# EUROPÄISCHE PATENTSCHRIFT

(11) **EP 1 208 700 B1**
(45) Veröffentlichungstag und Bekanntmachung des Hinweises auf die Patenterteilung: **19.01.2005**
(21) Anmeldenummer: 00963918.8
(22) Anmeldetag: 22.08.2000
(51) Int. Cl.: H04Q 3/545

(54) **VERFAHREN UND VORRICHTUNG ZUM VERARBEITEN VON SIGNALISIERUNGSINFORMATIONEN IN EINEM TELEKOMMUNIKATIONSNETZ**
METHOD AND DEVICE FOR PROCESSING SIGNALING INFORMATION IN A TELECOMMUNICATIONS NETWORK
PROCEDE ET DISPOSITIF DE TRAITEMENT D'INFORMATIONS DE SIGNALISATION DANS UN RESEAU DE TELECOMMUNICATION

(30) Priorität: 30.08.1999 DE 19941143
(43) Veröffentlichungstag der Anmeldung: 29.05.2002
(73) Patentinhaber: SIEMENS AKTIENGESELLSCHAFT, 80333 München (DE)
(72) Erfinder: FREYENBERG, Christian, 82057 Icking (DE)
(86) Internationale Anmeldenummer: PCT/DE2000/002860
(87) Internationale Veröffentlichungsnummer: WO 2001/017312

(56) Entgegenhaltungen:
- EP-A- 0 697 796
- WO-A-97/24885
- US-A- 5 461 669
- US-A- 5 673 261

## Beschreibung

Die Erfindung betrifft ein Verfahren zum Verarbeiten von Signalisierungsinformationen in einem Telekommunikationsnetz nach dem Oberbegriff vom Patentanspruch 1 und eine Vorrichtung zur Durchführung des Verfahrens nach dem Oberbegriff vom Patentanspruch 6.

Signalisierungsinformationen werden zwischen einer Teilnehmer-Endeinrichtung und einer Vermittlungsstelle in einem Telekommunikationsnetz entweder Inband, d.h. innerhalb des für die Nutzdaten vorgesehenen Kanals, oder Outband, d.h. in einem ausschließlich dafür vorgesehenen Signalisierungskanal, übertragen.

In ISDN (Integrated Services Digital Network) ist beispielsweise eine Outband-Signalisierung über den D-Kanal vorgesehen.

In einem analogen Telefonnetz findet dagegen die Signalisierung Inband vor der eigentlichen Kommunikation, d.h. während des Verbindungsaufbaus statt. Während einer Kommunikation kann eine Signalisierung durch einen Hook-Flash, also einer Unterbrechung der Kommunikation, eingeleitet werden. In diesem Fall detektiert die Vermittlungsstelle, daß die Kommunikationsverbindung unterbrochen ist und eine Signalisierung gewünscht wird. Die Vermittlungsstelle schaltet dann einen Code-Receiver für die Auswertung der Signalisierung in die Verbindung.

Die Signalisierungsinformationen werden beispielsweise zur Einleitung von Telekommunikationsdiensten wie Rückruf, Makeln oder Rufweiterleitung verwendet. Diese Telekommunikationsdienste werden von einer in der Vermittlungsstelle eingesetzten Software ausgeführt, die auf Servern in der Vermittlungsstelle läuft. Zur Einführung neuer Telekommunikationsdienste muß die Software geändert und auf den Servern neu eingespielt werden. Dies bedingt allerdings für den Zeitpunkt der Einspielung der geänderten Software eine Unterbrechung des Betriebs der Telekommunikationsdienste in der Vermittlungsstelle. Ein weiterer Nachteil besteht darin, daß eine Änderung der auf den Servern ablaufenden Software spezielle Programmierkenntnisse in der Programmiersprache, in der die Software geschrieben ist, erfordert. Die dafür verwendeten Programmiersprachen sind nämlich in der Regel maschinennahe Programmiersprachen, wodurch eine Änderung von in diesen Programmiersprachen geschriebenen Programmen sehr aufwendig ist.

Im US Patent 5 673 261 ist ein Kommunikations-System beschrieben, bei dem an eine Vermittlungseinrichtung eine externe Service-Einrichtung angeschlossen werden kann, um bestimmte Dienstleistungen verfügbar zu machen. Die Vermittlungseinrichtung und die Service-Einrichtung enthalten spezielle Baugruppen, Programme, Prozeduren und Schnittstellen um dies zu ermöglichen. Diese Erweiterungen erfordern spezielle Schnittstellen und sind aufwendig zu implementieren.

Die europäische Patentanmeldung EP 0 697 796 A2 beschreibt ein Kommunikationssteuersystem, das intern in zwei Bereiche unterteilt ist. Zum einen in ein reines Vermittlungssystem und zum anderen ein Leistungsmerkmalsystem. Diese beiden Systeme kommunizieren intern über ein definiertes Protokoll.
Dieser veröffentlichten Anmeldung liegt die Aufgabe zugrunde, ein einfaches Hinzufügen, Entfernen und Ändern von Leistungsmerkmalen im Leistungsmerkmalsystem zu ermöglichen. Dies wird dadurch erreicht, dass einzelne Leistungsmerkmalsmodule vorgesehen sind, die durch eine Leistungsmerkmalsablaufsteuerung jeweils aktiviert werden. Nachteil dieser Erfindung ist die aufwendige Leistungsmerkmalsablaufsteuerung. Die Kommunikation zwischen Vermittlungsstelle und Leistungsmerkmalssystem bzw. zusätzlicher Programmroutinen erfolgt in beiden Fällen mittels proprietärer Lösungen.

Aufgabe der vorliegenden Erfindung ist es daher, die Einführung neuer Telekommunikationsdienste zusätzlich zu den von einer Vermittlungsstelle zur Verfügung gestellten einerseits möglichst kostengünstig, insbesondere von einem Betreiber der Vermittlungsstelle selbst und andererseits weitgehend unabhängig vom Standort der Vermittlungsstelle zu ermöglichen.

Diese Aufgabe wird durch ein Verfahren mit den Merkmalen von Patentanspruch 1 und durch eine Vorrichtung mit den Merkmalen von Patentanspruch 6 gelöst. Besondere Ausgestaltungen der Erfindung ergeben sich aus den abhängigen Patentansprüchen.

Die Erfindung betrifft ein Verfahren zum Verarbeiten von Signalisierungsinformationen in einem Telekommunikationsnetz, wobei eine Vermittlungsstelle mit einer Teilnehmerendeinrichtung Signalisierungsinformationen austauscht. Die Signalisierungsinformationen werden in der Vermittlungsstelle in mindestens eine Nachricht umgesetzt, die an mindestens einen mit der Vermittlungsstelle über das Internet verbundenen Telekommunikationsdienste-Server, übertragen werden, wobei der oder die Telekommunikationsdienste-Server den oder die den Nachrichten entsprechende Telekommunikationsdienste ausführt bzw. ausführen. Der Telekommunikationsdienste-Server, der zusätzliche Telekommunikationsdienste bereitstellt, ist über das Internet mit der Vermittlungsstelle verbunden und als Internetserver ausgebildet.

Der Vorteil einer Anbindung des Telekommunikationsdienste-Server über das Internet an eine Vermittlungsstelle besteht insbesondere darin, dass der Telekommunikationsdienste-Server an einen beliebigen Ort aufgestellt werden kann und über das nahezu weltumspannende Internet an eine weit entfernt Vermittlungsstelle angebunden werden kann.

Ein weiterer Vorteil liegt in der weiten Verbreitung des Internets und den damit verbundenen Diensten, Protokollen, Schnittstellen und Softwarekomponenten, die für die beabsichtigten Zwecke vorteilhaft eingesetzt werden können. Als Beispiel sei hier nur das Empfangen und Senden von Nachrichten im Internet-Protokoll-Format genannt. Das Internet-Protokoll oder kürzer IP ist standardgemäß mittlerweile in einer Vielzahl von Betriebssystemen für Computer eingebaut und damit weit verbreitet.

Vorteilhafterweise können bei dem erfindungsgemäßen Verfahren Telekommunikations-Dienste ohne eine Änderung der auf den Servern der Vermittlungsstelle ablaufenden Programme dadurch eingeführt werden, daß die Telekommunikationsdienste-Server, die sozusagen eine externe Erweiterung der Vermittlungsstelle bilden, die Telekommunikations-Dienste ausführen. Dazu müssen die Signalisierungsinformationen, die von der Vermittlungsstelle empfangen werden, an die zusätzlichen Telekommunikationsdienste-Server weitergegeben werden. Dies geschieht durch Umsetzen der Signalisierungsinformationen in Nachrichten, die an den oder die Telekommunikationsdienste-Server weitergeleitet werden. Neue Telekommunikations-Dienste können somit durch zusätzliche Telekommunikationsdienste-Server-Applikationen einfach nachgerüstet werden. Beispielsweise ist es möglich, Telekommunikations-Dienste wie "Call Forwarding" oder "Outgoing Call Barring" auf einem Telekommunikationsdienste-Server zu implementieren. Ferner können Telekommunikationsdienste unabhängig vom Hersteller der Vermittlungsstelle eingeführt werden. Durch die Anbindung mehrerer Telekommunikationsdienste-Server an die Vermittlungsstelle kann wie in einem Rechnernetzwerk die Rechenlast durch die Telekommunikationsdienste auf die Telekommunikationsdienste-Server verteilt werden. Die lokale Verarbeitung der Telekommunikationsdienste in der Vermittlungsstelle wird somit durch die Erfindung teilweise in einen oder mehrere Telekommunikationsdienste-Server verlagert, der bzw. die als Internet-Server ausgebildet ist bzw. sind. Die Teilnehmerendeinrichtung kann ein Teilnehmer-Endgerät, insbesondere ein Telefon, Telefax oder Modem, oder auch ein Netzabschluß, der intelligente Funktionen zum Signalisieren aufweist, sein.

Besonders bevorzugt weisen der oder die Telekommunikationsdienste-Server jeweils eine Vielzahl von Programmroutinen zur Durchführung mehrerer Telekommunikationsdienste auf, wobei die Programmroutinen in einer höheren Programmiersprache geschrieben sind. Dadurch gestaltet sich eine Einführung oder Änderung von Telekommunikationsdiensten besonders einfach, da lediglich die in der höheren Programmiersprache geschriebenen Programmroutinen auf dem oder den Telekommunikationsdienste-Servern umprogrammiert werden müssen. Da die Programmroutinen in einer höheren Programmiersprache geschrieben sind, ist eine Änderung im Vergleich zu einer Anderung der maschinennahen Programme in der Vermittlungsstelle weniger aufwendig und damit auch billiger auszuführen.

Bevorzugt führen der oder die Telekommunikationsdienste-Server vermittlungstechnische Telekommunikationsdienste aus, wobei die vermittlungstechnischen Telekommunikationsdienste die Vermittlungsdienste, die von der Vermittlungsstelle ausgeführt werden, erweitern. Dadurch können zusätzliche Vermittlungsdienste schnell und flexibel mittels der Telekommunikationsdienste-Server eingeführt werden.

Vorzugsweise führen der oder die Telekommunikationsdienste-Server teilnehmerspezifische oder nationalspezifische Telekommunikationsdienste aus. Beispielsweise kann ein Teilnehmer zusätzliche Telekommunikationsdienste beantragen, die dann lediglich durch Bereitstellung zusätzlicher oder Erweiterung vorhandener Programmroutinen auf dem oder den Telekommunikationsdienste-Servern für den Teilnehmer freigeschaltet werden. Die Vermittlungsstelle wickelt nur die für alle Teilnehmer gleichen Telekommunikationsdienste ab; zusätzliche, vom Teilnehmer gewünschte Dienste stellen dagegen die Programmroutinen auf dem oder den Telekommunikationsdienste-Servern zur Verfügung. Ferner können neue Telekommunikationsdienste einfacher auf Akzeptanz bei den Kunden der Dienste getestet werden, da lediglich die Software der Telekommunikationsdienste-Server um die neuen Dienste erweitert werden muß, bevor bzw. anstatt die Dienste aufwendig in die Software der Vermittlungsstelle zu integrieren. Alternativ oder zusätzlich können die von den Programmroutinen durchzuführenden Telekommunikationsdienste auch nationalspezifische Telekommunikationsdienste aufweisen. Hierbei ist besonders vorteilhaft, daß die Vermittlungsstelle lediglich länderunabhängige Telekommunikationsdienste, d.h. für alle Länder gleiche Telekommunikationsdienste, ausführt und die nationalspezifischen Telekommunikationsdienste auf dem oder den Telekommunikationsdienste-Servern durch entsprechende Programmroutinen ausgeführt werden. Die Vermittlungsstelle ist somit unabhängig von nationalspezifischen Telekommunikationsdiensten weltweit einsetzbar. Die nationalspezifischen Telekommunikationsdienste werden durch entsprechende Telekommunikationsdienste-Server-Programme bereitgestellt.

Besonders bevorzugt wird das Verfahren im ISDN eingesetzt. Die Signalisierungsinformationen sind dann Steuerinformationen des ISDN-D-Kanal-Protokolls und die Steuerinformationen werden über einen D-Kanal zwischen der Teilnehmer-Endeinrichtung und der Vermittlungsstelle ausgetauscht, wobei die Steuerinformationen ISDN-Dienstinformationen für mindestens einen ISDN-Dienst aufweisen, die in der Vermittlungsstelle in Nachrichten umgesetzt werden und die an mindestens einen mit der Vermittlungsstelle verbundenen ISDN-D-Kanal-Server, der dem Telekommunikationsdienst-Server entspricht, übertragen werden, wobei der oder die ISDN-D-Kanal-Server den oder die Nachrichten entsprechenden ISDN-Dienste ausführt bzw. ausführen.

Die Erfindung betrifft ferner eine Vorrichtung zum Verarbeiten von Signalisierungsinformationen in einem Telekommunikationsnetz, wobei eine Steuerung zum Senden, Empfangen und Verarbeiten der Signalisierungsinformationen in einer Vermittlungsstelle vorgesehen ist, die mit einem Server in der Vermittlungsstelle verbunden ist. Erfindungsgemäß weist die Steuerung eine Einrichtung zum Umsetzen von empfangenen Signalisierungsinformationen, die mindestens einen Telekommunikationsdienst betreffen, in Nachrichten und eine Schnittstelle zum Anschließen mindestens eines Telekommunikationsdienste-Servers an die Vermittlungsstelle auf, wobei der oder die Telekommunikationsdienste-Server zum Ausführen des oder der Telekommunikationsdienste vorgesehen sind.

Vorzugsweise weist jeder Telekommunikationsdienst-Server eine Schnittstelle zum Verbinden mit der Vermittlungsstelle auf, wobei die Schnittstelle Nachrichten von der Vermittlungsstelle empfängt und den Nachrichten entsprechende Telekommunikationsdienste auf dem oder den Telekommunikationsdienste-Server ausruft.

Durch die Ausbildung des Telekommunikationsdienste-Server als Internet-Server ist eine einfache Anwendung von IP-Telefonie (Internet-Protocol-Telefonie) ermöglicht.

Vorzugsweise wird die Vorrichtung im ISDN eingesetzt. Die Signalisierungsinformationen sind dann Steuerinformationen des ISDN-D-Kanal-Protokolls und die Steuerung sendet und empfängt über einen D-Kanal Steuerinformationen, wobei die Schnittstelle zum Anschließen mindestens eines ISDN-D-Kanal-Servers als Telekommunikationsdienste-Server dient. Vorzugsweise führen der oder die ISDN-D-Kanal-Server den Steuerinformationen entsprechende ISDN-Dienste aus.

Nachfolgend werden weitere Vorteile und Anwendungsmöglichkeiten der Erfindung anhand eines Ausführungsbeispieles der Erfindung im ISDN in Verbindung mit der Zeichnung erläutert. In der Zeichnung zeigt:
- Fig. 1: ein Blockschaltbild, in dem ein ISDN-Teilnehmerendgerät mit einer ISDN-Vermittlungsstelle verbunden ist und wobei erfindungsgemäß ein ISDN-D-Kanal-Server zum Ausführen von ISDN-Diensten mit der ISDN-Vermittlungsstelle verbunden ist,
- Fig. 2: die Übertragung eines D-Kanal-Protokolls zwischen einem ersten Teilnehmerendgerät über eine ISDN-Vermittlungsstelle und einem zweiten Teilnehmerendgerät und
- Fig. 3: die Anbindung eines ISDN-D-Kanal-Servers als Internet-Server an eine ISDN-Vermittlungsstelle.

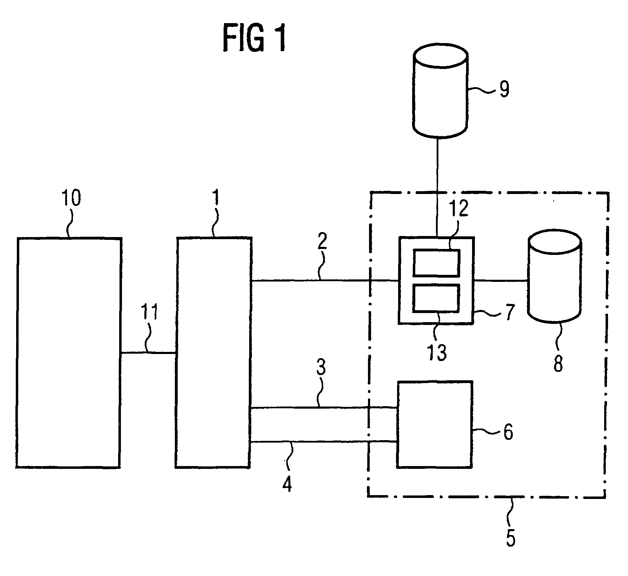

In Fig. 1 ist ein ISDN-Teilnehmerendgerät 10 mit einem ISDN-Netzabschluß 1 über einen SO-Bus 11 verbunden. Der ISDN-Netzabschluß 1 ist wiederum mit einer digitalen ISDN-Vermittlungsstelle 5 verbunden. Zwischen der ISDN-Vermittlungsstelle 5 und dem ISDN-Netzabschluß 1 sind ein D-Kanal 2 und zwei B-Kanäle 3 und 4 vorgesehen. Über den D-Kanal 2 tauschen die ISDN-Vermittlungsstelle 5 und der ISDN-Netzabschluß 1 Signalisierungsinformationen entsprechend dem DSS1-Protokoll (Digital Signalling System 1-Protokoll) gemäß der ITU-Empfehlung Q.950 aus. Die über den D-Kanal 2 ausgetauschten Signalisierungsinformationen dienen beispielsweise zum Aufbau einer Verbindung zwischen zwei Teilnehmern, zum Abbau einer bestehenden Verbindung oder zur Einleitung verschiedener ISDN-Dienste wie Konferenzschaltung, Rückfrage oder Abrufweiterleitung. Für eine Anrufweiterleitung signalisiert beispielsweise ein Teilnehmer über sein Teilnehmerendgerät der ISDN-Vermittlungsstelle 5, daß für die dem Teilnehmerendgerät 10 entsprechende Teilnehmernummer eingehende Anrufe an eine zweite Teilnehmernummer weitergeleitet werden sollen. Die dazu vom Teilnehmer über das Teilnehmerendgerät 10 eingegebenen Signalisierungen werden als Signalisierungsinformationen über den D-Kanal 2 an eine D-Kanal-Steuerung 7 zum Senden, Empfangen und Verarbeiten des ISDN-D-Kanal-Protokolls in der ISDN-Vermittlungsstelle 5 übertragen. Die D-Kanal-Steuerung 7 ist mit einem ISDN-Server 8 in der ISDN-Vermittlungsstelle 5 gekoppelt. Auf dem ISDN-Server 8 läuft ein Programm zum Verarbeiten der Signalisierungsinformationen des ISDN-D-Kanal-Protokolls und zur Ausführung entsprechender ISDN-Dienste. Die beiden B-Kanäle 3 und 4 werden in einer B-Kanal-Verarbeitungseinrichtung 6 in der ISDN-Vermittlungsstelle 5 bedient und werden für die Übertragung von Daten und/oder Sprache genutzt.

Die D-Kanal-Steuerung 7 weist eine Einrichtung 13 zum Umsetzen von über den D-Kanal empfangenen Steuerinformationen und eine Schnittstelle 12 zum Anschließen mindestens eines ISDN-D-Kanal-Servers 9 auf. Die Einrichtung zum Umsetzen von über den D-Kanal empfangenen Steuerinformationen 13 setzt Steuer- bzw. Signalisierungsinformationen des D-Kanal-Protokolls in Nachrichten um, die über die Schnittstelle 12 an den oder die ISDN-D-Kanal-Server 9 übertragen werden.

Auf dem oder den ISDN-D-Kanal-Servern 9 sind Programmroutinen zum Ausführen von ISDN-Diensten wie beispielsweise "Call Forwarding", "Outgoing Call Bearing" oder "Message Waiting Indication" vorgesehen. Die auf dem oder den ISDN-D-Kanal-Servern 9 vorgesehenen Programmroutinen sind dabei in einer höheren Programmiersprache wie beispielsweise C oder C++ entwickelt worden. Jeder der ISDN-D-Kanal-Server 9 weist eine Schnittstelle zum Empfangen der Nachrichten von der D-Kanal-Steuerung 7 der ISDN-Vermittlungsstelle 5 auf. Die von der Schnittstelle des ISDN-D-Kanal-Servers 9 empfangenen Nachrichten werden zum Ausführen einer entsprechenden Programmroutine für einen ISDN-Dienst verwendet. Von der Programmroutine erzeugte Ausgaben werden wiederum von der Schnittstelle des ISDN-D-Kanal-Servers 9 in Nachrichten umgesetzt und an die D-Kanal-Steuerung 7 der ISDN-Vermittlungsstelle 5 gesendet. In der ISDN-Vermittlungsstelle 5 werden die empfangenen Nachrichten in der D-Kanal-Steuerung 7 von der Schnittstelle 12 empfangen und in entsprechende Steuer- bzw. Signalisierungsinformationen des D-Kanal-Protokolls umgesetzt und über den D-Kanal 2 an den ISDN-Netzabschluß 1 übertragen.

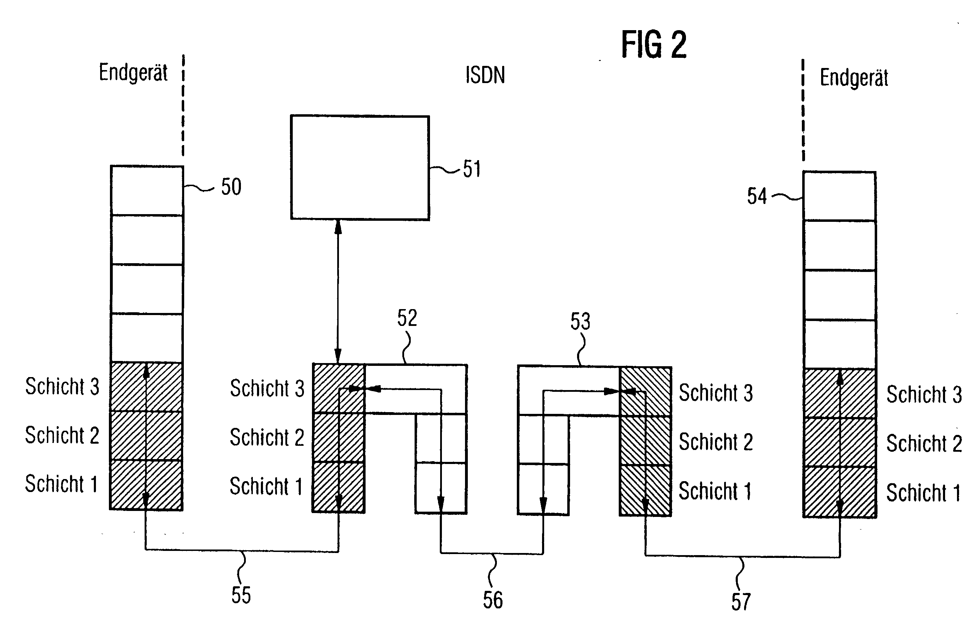

In Fig. 2 ist die Protokollarchitektur für die Übertragung von Steuerinformationen über den D-Kanal dargestellt.

Ein erstes Teilnehmerendgerät 50 ist dabei mit einer ersten digitalen ISDN-Vermittlungsstelle 52 über einen ersten D-Kanal 55 verbunden. Ein zweites Teilnehmerendgerät 54 ist über einen zweiten D-Kanal 57 mit einer zweiten digitalen ISDN-Vermittlungsstelle 53 verbunden. Die erste ISDN-Vermittlungsstelle 52 und die zweite ISDN-Vermittlungsstelle 53 sind über eine Signalisierungsleitung 56, über die vermittlungsstellenspezifische Protokolle gemäß dem Zeichengabe-System Nr. 7 der ITU-T übertragen werden, miteinander verbunden.

In dem ersten Teilnehmerendgerät 50 und dem zweiten Teilnehmerendgerät 54 sind die Schichten 1 bis 3 der OSI-Spezifikation dargestellt, die für das D-Kanal-Protokoll genutzt werden. Ebenso sind in der ersten Vermittlungsstelle 52 und der zweiten Vermittlungsstelle 53 auf der mit dem ersten Teilnehmerendgerät 50 bzw. dem zweiten Teilnehmerendgerät 54 verbundenen Seite die Schichten 1 bis 3 der OSI-Spezifikation dargestellt. Die höheren Schichten 4 bis 7 (anwendungsorientierte Schichten) der OSI-Spezifikation haben für die Übertragung von Steuerinformationen im D-Kanal nur eine Ende-zu-Ende-Bedeutung. Diese Protokolle werden direkt und über das ISDN-Netzwerk transparent zwischen den Teilnehmerendgeräten ausgetauscht.

Mit der ersten ISDN-Vermittlungsstelle 52 ist ein ISDN-D-Kanal-Server 51 verbunden, der von der ersten ISDN-Vermittlungsstelle 52 Signalisierungsinformationen des D-Kanal-Protokolls empfängt und diese auswertet. Auf dem ISDN-D-Kanal-Server 51 sind Programme zum Ausführen von ISDN-Diensten abgelegt. Entsprechend den empfangenen Steuerinformationen startet der ISDN-D-Kanal-Server 51 ein Programm zum Ausführen eines ISDN-Dienstes. Somit wird die erste ISDN-Vermittlungsstelle 52 von der Behandlung spezieller ISDN-Dienste, die von dem ISDN-D-Kanal-Server 51 bearbeitet werden, entlastet. Ferner können ISDN-Dienste, die entweder teilnehmerspezifisch oder nationalspezifisch sind oder neu eingeführt werden sollen, von dem ISDN-D-Kanal-Server 51 ausgeführt werden. Dadurch muß - wie bereits vorher beschrieben - die Software der ersten ISDN-Vermittlungsstelle 52 zur Einführung neuer ISDN-Dienste nicht geändert werden, und der Betrieb der ersten ISDN-Vermittlungsstelle 52 wird nicht aufgrund von Änderungen unterbrochen. Durch die Anbindung mehrerer ISDN-D-Kanal-Server an die erste ISDN-Vermittlungsstelle 52 kann die durch die zusätzlichen ISDN-Dienste erzeugte Last auf diese Server wie in einem Rechnernetz verteilt werden. Dadurch ist zudem die Kapazität für zusätzliche ISDN-Dienste durch Anbindung zusätzlicher ISDN-D-Kanal-Server an die erste ISDN-Vermittlungsstelle 52 ausbaubar. Beispielsweise können besondere ISDN-D-Kanal-Server zum Routing von Dienstanforderungen an entsprechende ISDN-D-Kanal-Server vorgesehen sein (MWI-Server routet "Call Forwarding"-Dienstanforderung an den ISCI-Server, der den Dienst ausführt).

Der Einsatz des Verfahrens und der Vorrichtung nach der Erfindung ist nicht auf ISDN-Vermittlungsstellen beschränkt, sondern auch in nichtöffentlichen ISDN-Telekommunikationsanlagen (ISDN-TK-Anlagen) denkbar. Dabei kann eine ISDN-TK-Anlage beispielsweise mit einem Rechner, der zusätzliche, nicht von der ISDN-TK-Anlage zur Verfügung gestellte ISDN-Dienste ausführt, verbunden werden. Dem Rechner werden dann von der ISDN-TK-Anlage wie im Falle der ISDN-Vermittlungsstelle die Signalisierungsinformationen des D-Kanals gemäß dem Verfahren nach der Erfindung übermittelt. Der Rechner führt dann die den übermittelten Signalisierungsinformationen des D-Kanals entsprechenden ISDN-Dienste aus und entlastet die ISDN-TK-Anlage. Im Grundprinzip unterscheidet sich daher die ISDN-TK-Anlage nicht von einer ISDN-Vermittlungsstelle.

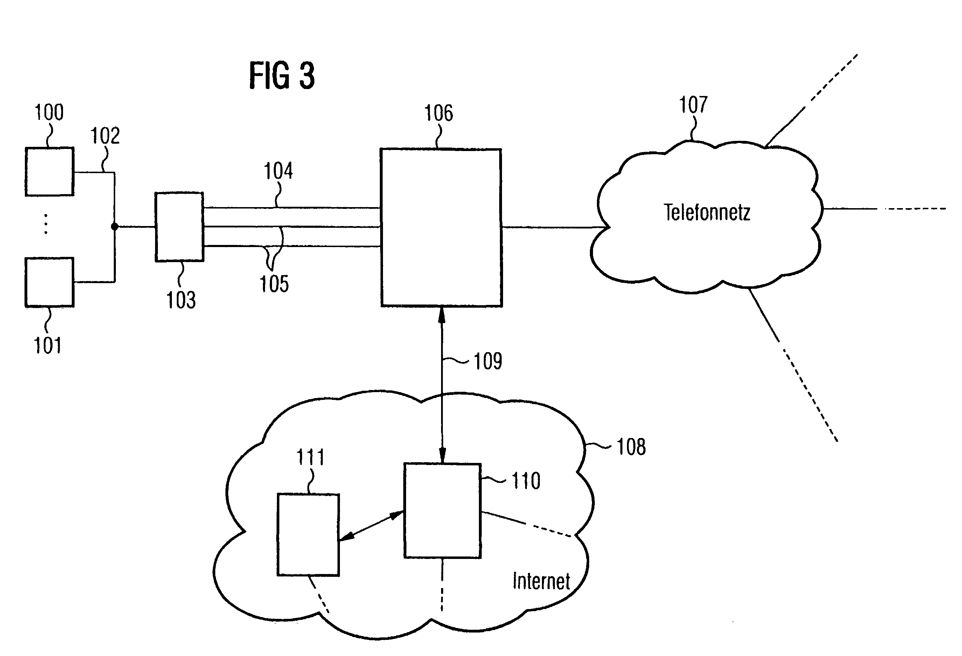

In Fig. 3 ist der Einsatz eines ISDN-D-Kanal-Servers als Internet-Server dargestellt.

Eine Vielzahl von Teilnehmerendgeräten 100 und 101 sind über einen SO-Bus 102 mit einem ISDN-Netzabschluß 103 verbunden. Zwischen dem ISDN-Netzabschluß 103 und einer ISDN-Vermittlungsstelle 106 sind zwei B-Kanäle 105 und ein D-Kanal 104 zur Übertragung von Signalen vorgesehen.

Die ISDN-Vermittlungsstelle 106 ist mit dem öffentlichen Telefonnetz 107 für die Sprach- und Datenübertragung zwischen Teilnehmern verbunden.

Über eine Internet-Anbindung 109 ist die ISDN-Vermittlungsstelle 106 mit einem ersten Internet-Server 110, der als ISDN-D-Kanal-Server arbeitet, verbunden. Der erste Internet-Server 110 ist in das Internet 108 eingebunden und mit einer Vielzahl von weiteren Internet-Servern 111 über das Internet 108 verbunden.

Fordert nun ein Teilnehmerendgerät 100 oder 101 einen ISDN-Dienst an, der von einem ISDN-D-Kanal-Protokoll-Server bearbeitet wird, so wird die Dienstanforderung über den D-Kanal 104 an die ISDN-Vermittlungsstelle 106 übermittelt. Die ISDN-Vermittlungsstelle 106 setzt dann die empfangene Dienstanforderung in eine Nachricht im Internet-Protokoll-Format um und überträgt diese Nachricht über die Internetanbindung 109 an den ersten Internet-Server 110. Der erste Internet-Server 110 verarbeitet daraufhin die empfangene Nachricht und führt dazu den entsprechenden ISDN-Dienst aus. Wird dazu eine Anwort erzeugt, leitet der erste Internet-Server 110 diese Antwort über die bidirektionale Internet-Anbindung 109 an die ISDN-Vermittlungsstelle 106 zurück. Will beispielsweise ein Teilnehmer über sein ISDN-Teilnehmerendgerät ein IP-Telefonat (Internet-Protokoll-Telefonat) ausführen, so kann er die Anforderung eines ISDN-Dienstes "IP-Telefonat" der ISDN-Vermittlungsstelle 106 über den D-Kanal 104 signalisieren. Die ISDN-Vermittlungsstelle 106 übermittelt dann die Dienstanforderung über die Internetanbindung 109 an den ersten Internet-Server 110, der wiederum eine IP-Telefonat-Verbindung über das Internet aufbaut.

Obwohl die Ausführungsbeispiele die Anwendung der Erfindung im ISDN beschreiben, ist die Erfindung entsprechend den Ansprüchen nicht auf ISDN beschränkt. Eine Anwendung der Erfindung ist genauso gut im analogen Telefonnetz oder in IP-basierten/paketvermittelnden Netzen denkbar. Notwendige Abwandlungen der Erfindung hierzu sind dem Fachmann ohne weiteres geläufig. Alle oben beschriebenen Teile und Verfahrensschritte werden für sich alleine gesehen und in jeder Kombination, insbesondere die in den Zeichnungen dargestellten Details, als erfindungswesentlich beansprucht. Entsprechende Abänderungen hiervon sind dem Fachmann geläufig.

## Patentansprüche

1. Verfahren zum Verarbeiten von Signalisierungsinformationen in einem Telekommunikationsnetz, wobei eine Vermittlungsstelle (5) mit einer Teilnehmerendeinrichtung (10) Signalisierungsinformationen austauscht, wobei die Signalisierungsinformationen in der Vermittlungsstelle (5) in mindestens eine Nachricht umgesetzt werden, die an mindestens einen mit der Vermittlungsstelle (5) verbundenen Telekommunikationsdienste-Server (9) übertragen wird, wobei der oder die Telekommunikationsdienste-Server (9) den Nachrichten entsprechende Telekommunikationsdienste ausführt bzw. ausführen,
**dadurch gekennzeichnet, dass**
die Nachricht über das Internet an einen Internet-Server als Telekommunikationsdienste-Server übertragen wird.

2. Verfahren nach Anspruch 1,
**dadurch gekennzeichnet, dass**
die Signalisierungsinformationen Steuerinformationen des ISDN-D-Kanal-Protokolls sind und die Steuerinformationen über einen D-Kanal (2) zwischen der Teilnehmerendeinrichtung (10) und der Vermittlungsstelle (5) ausgetauscht werden, wobei die Steuerinformationen ISDN-Dienstinformationen für mindestens einen ISDN-Dienst aufweisen, die in der Vermittlungsstelle (5) in Nachrichten umgesetzt werden und die an mindestens einen mit der Vermittlungsstelle (5) verbundenen ISDN-D-Kanal-Server (9), der dem Telekommunikationsdienste-Server entspricht, übertragen werden, wobei der oder die ISDN-D-Kanal-Server (9) den oder die Nachrichten entsprechenden ISDN-Dienst(e) ausführt bzw. ausführen.

3. Verfahren nach Anspruch 1 oder 2,
**dadurch gekennzeichnet, dass**
der oder die Telekommunikationsdienste-Server (9) jeweils eine Vielzahl von Programmroutinen zur Durchführung mehrerer Telekommunikationsdienste aufweist bzw. aufweisen, wobei die Programmroutinen in einer höheren Programmiersprache geschrieben sind.

4. Verfahren nach Anspruch 1, 2 oder 3,
**dadurch gekennzeichnet, dass**
der oder die Telekommunikationsdienste-Server (9) vermittlungstechnische Telekommunikationsdienste ausführt bzw. ausführen, wobei die vermittlungstechnischen Telekommunikationsdienste die Telekommunikationsdienste erweitern, die von der Vermittlungsstelle (5) ausgeführt werden.

5. Verfahren nach Anspruch 3 oder 4,
**dadurch gekennzeichnet, dass**
der oder die Telekommunikationsdienste-Server (9) teilnehmerspezifische oder nationalspezifische Telekommunikatonsdienste ausführt bzw. ausführen.

6. Vorrichtung zum Verarbeiten von Signalisierungsinformationen in einem Telekommunikationsnetz, wobei eine Steuerung (7) zum Senden, Empfangen und Verarbeiten der Signalisierungsinformationen vorgesehen ist, die mit einem Server (8) in einer Vermittlungsstelle (5) verbunden ist, wobei die Steuerung (7) eine Einrichtung zum Umsetzen von empfangenen Signalisierungsinformationen, die mindestens einen Telekommunikationsdienst betreffen, in Nachrichten (13) und eine Schnittstelle (12) zum Anschließen mindestens eines Telekommunikationsdienste-Servers (9) an die Vermittlungsstelle (5) aufweist, wobei der oder die Telekommunikationsdienste-Server (9) zum Ausführen des oder der Telekommunikationsdienste vorgesehen ist bzw. sind,
**dadurch gekennzeichnet, dass**
der oder die Telekommunikationsdienste-Server (9) (ein) Internet-Server ist bzw. sind, der bzw. die mit dem Internet verbunden ist bzw. sind.

7. Vorrichtung nach Anspruch 6,
**dadurch gekennzeichnet, dass**
die Signalisierungsinformationen Steuerinformationen des ISDN-D-Kanal-Protokolls sind und die Steuerung (7) über einen D-Kanal (2) Steuerinformationen sendet und empfängt, wobei die Schnittstelle (12) zum Anschließen mindestens eines ISDN-D-Kanal-Servers (9) als Telekommunikationsdienste-Server dient.

8. Vorrichtung nach Anspruch 6 oder 7,
**dadurch gekennzeichnet, dass**
der oder die Telekommunikationsdienste-Server (9) eine Schnittstelle zum Verbinden mit der Vermittlungsstelle (5) aufweist bzw. aufweisen, wobei die Schnittstelle Nachrichten von der Vermittlungsstelle (5) empfängt und den Nachrichten entsprechende Telekommunikationsdienste auf dem oder den Telekommunikationsdienste-Servern (9) aufruft.

9. Vorrichtung nach Anspruch 7,
**dadurch gekennzeichnet, dass**
der oder die ISDN-D-Kanal-Server (9) den Steuerinformationen entsprechende ISDN-Dienste ausführt bzw. ausführen.

## Claims

1. Method for processing signalling information in a telecommunications network, with a switching centre (5) interchanging signalling information with a subscriber terminal (10),
the signalling information being converted in the switching centre (5) to at least one message which is transmitted to at least one telecommunications service server (9) which is connected to the switching centre (5), with the telecommunications service server or servers (9) carrying out the telecommunications services corresponding to the messages, **characterized in that** the message is transmitted via the Internet to an internet server as the telecommunications service server.

2. Method according to Claim 1,
**characterized in that**
the signalling information is control information for the ISDN D channel protocol, and the control information is interchanged via a D channel (2) between the subscriber terminal (10) and the switching centre (5), with the control information having ISDN service information for at least one ISDN service, which information is converted in the switching centre (5) into messages and is transmitted to at least one ISDN D channel server (9) which is connected to the switching centre (5) and corresponds to the telecommunications service server, and with the ISDN D channel server or servers (9) carrying out the ISDN service or services corresponding to the messages.

3. Method according to Claim 1 or 2,
**characterized in that**
the telecommunications service server or servers (9) each has or have a large number of program routines for carrying out a number of telecommunications services, with the program routines being written in a relatively high-level programming language.

4. Method according to Claim 1, 2 or 3,
**characterized in that**
the telecommunications service server or servers (9) carries out or carry out switching telecommunications services, with the switching telecommunications services expanding the telecommunications services which are carried out by the switching centre (5).

5. Method according to Claim 3 or 4,
**characterized in that**
the telecommunications service server or servers (9) carries out or carry out subscriber-specific or national-specific telecommunications services.

6. Apparatus for processing signalling information in a telecommunications network, with a controller (7) being provided for transmitting, receiving and processing the signalling information and being connected to a server (8) in a switching centre (5), with the controller (7) having a device for converting received signalling information, which relates at least to one telecommunications service, into messages (13), and having an interface (12) for connecting at least one telecommunications service server (9) to the switching centre (5), with the telecommunications service server or servers (9) being intended for carrying out the telecommunications service or services, **characterized in that** the telecommunications service server or servers (9) is or are an Internet server or Internet servers, which is or are connected to the Internet.

7. Apparatus according to Claim 6,
**characterized in that**
the signalling information is control information for the ISDN D channel protocol, and the controller (7) transmits and receives control information via a D channel (2), with the interface (12) being used for connecting at least one ISDN D channel server (9) as a telecommunications service server.

8. Apparatus according to Claim 6 or 7,
**characterized in that**
the telecommunications service server or servers (9) has or have an interface for connection to the switching centre (5), with the interface receiving messages from the switching centre (5) and calling telecommunications services, which correspond to the messages, on the telecommunications service server or servers (9).

9. Apparatus according to Claim 7,
**characterized in that**
the ISDN D channel server or servers (9) carries out or carry out the ISDN services corresponding to the control information.

## Revendications

1. Procédé pour le traitement d'informations de signalisation dans un réseau de télécommunications, un centre de commutation (5) échangeant des informations de signalisation avec un dispositif terminal d'abonné (10), les informations de signalisation étant converties dans le centre de commutation (5) en au moins un message qui est transmis à au moins un serveur de services de télécommunications (9) relié au centre de commutation (5), le serveur ou les serveurs de services de télécommunications (9) exécutant des services de télécommunications correspondant aux messages,
**caractérisé en ce que**
le message est transmis à un serveur Internet en tant que serveur de services de télécommunications via l'Internet.

2. Procédé selon la revendication 1,
**caractérisé en ce que**
les informations de signalisation sont des informations de commande du protocole du canal D ISDN et les informations de commande sont échangées sur un canal D (2) entre le dispositif terminal d'abonné (10) et le centre de commutation (5), les informations de commande comportant des informations de service ISDN pour au moins un service ISDN, lesquelles sont converties en messages dans le centre de commutation (5) et sont transmises à au moins un serveur du canal D ISDN (9) relié au centre de commutation (5) et correspondant au serveur de services de télécommunications, le serveur ou les serveurs du canal D ISDN (9) exécutant le service ou les services ISDN correspondant aux messages.

3. Procédé selon la revendication 1 ou 2,
**caractérisé en ce que**
le serveur ou les serveurs de services de télécommunications (9) comporte resp. comportent respectivement un grand nombre de routines de programme pour l'exécution de plusieurs services de télécommunications, les routines de programme étant écrites dans un langage de programmation supérieur.

4. Procédé selon la revendication 1, 2 ou 3,
**caractérisé en ce que**
le serveur ou les serveurs de services de télécommunications (9) exécute resp. exécutent des services de télécommunications ayant trait à la technique de commutation, les services de télécommunications ayant trait à la technique de commutation venant élargir les services de télécommunications qui sont exécutés par le centre de commutation (5).

5. Procédé selon la revendication 3 ou 4,
**caractérisé en ce que**
le serveur ou les serveurs de services de télécommunications (9) exécute resp. exécutent des services de télécommunications spécifiques aux abonnés ou spécifiques au niveau national.

6. Dispositif pour le traitement d'informations de signalisation dans un réseau de télécommunications, une commande (7) étant prévue pour l'émission, la réception et le traitement des informations de signalisation, laquelle est reliée à un serveur (8) dans un centre de commutation (5), la commande (7) comportant un système pour convertir en messages (13) des informations de signalisation reçues qui concernent au moins un service de télécommunications et une interface (12) pour raccorder au moins un serveur de services de télécommunications (9) au centre de commutation (5), le serveur ou les serveurs de services de télécommunications (9) étant prévu resp. prévus pour exécuter le service ou les services de télécommunications,
**caractérisé en ce que**
le serveur ou les serveurs de services de télécommunications (9) est resp. sont un serveur resp. des serveurs Intemet qui est resp. sont reliés à l'Internet.

7. Dispositif selon la revendication 6,
**caractérisé en ce que**
les informations de signalisation sont des informations de commande du protocole du canal D ISDN et la commande (7) émet et reçoit des informations de commande sur un canal D (2), l'interface (12) servant au raccordement d'au moins un serveur du canal D ISDN (9) en tant que serveur de services de télécommunications.

8. Dispositif selon la revendication 6 ou 7,
**caractérisé en ce que**
le serveur ou les serveurs de services de télécommunications (9) comporte resp. comportent une interface pour la liaison avec le centre de commutation (5), l'interface recevant des messages du centre de commutation (5) et appelant, sur le serveur ou les serveurs de services de télécommunications (9), des services de télécommunications qui correspondent aux messages.

9. Dispositif selon la revendication 7,
**caractérisé en ce que**
le serveur ou les serveurs du canal D ISDN (9) exécute resp. exécutent des services ISDN correspondant aux informations de commande.
